(19)

Europäisches Patentamt
European Patent Office
Office européen des brevets

(11) **EP 3 792 814 B1**

(12) **EUROPEAN PATENT SPECIFICATION**

(45) Date of publication and mention
of the grant of the patent:
**19.02.2025 Bulletin 2025/08**

(21) Application number: **19196450.1**

(22) Date of filing: **10.09.2019**

(51) International Patent Classification (IPC):
**G06V 10/58** *(2022.01)*     **G06V 10/82** *(2022.01)*
**G06V 10/56** *(2022.01)*

(52) Cooperative Patent Classification (CPC):
**G06V 20/56; G06F 18/2413; G06V 10/764;**
**G06V 10/82; G06V 20/58**

(54) **METHOD AND SYSTEM FOR SELECTING AN OPERATION MODE FOR AN AT LEAST PARTLY SELF-DRIVING VEHICLE**

VERFAHREN UND SYSTEM ZUR AUSWAHL EINES BETRIEBSMODUS FÜR EIN ZUMINDEST TEILWEISE SELBSTFAHRENDES FAHRZEUG

PROCÉDÉ ET SYSTÈME DE SÉLECTION D'UN MODE DE FONCTIONNEMENT POUR UN VÉHICULE À CONDUITE AUTONOME AU MOINS PARTIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.03.2021 Bulletin 2021/11**

(73) Proprietor: **Volvo Car Corporation**
**40531 Göteborg (SE)**

(72) Inventor: **TORNBERG, Lars**
**416 78 GÖTEBORG (SE)**

(74) Representative: **Kransell & Wennborg KB**
**P.O. Box 2096**
**403 12 Göteborg (SE)**

(56) References cited:
**US-A1- 2019 019 087**

- **SHASHANK KOTYAN ET AL: "Self Training Autonomous Driving Agent", ARXIV.ORG, CORNELL UNIVERSITY LIBRARY, 201 OLIN LIBRARY CORNELL UNIVERSITY ITHACA, NY 14853, 26 April 2019 (2019-04-26), XP081268533**
- **TAYLOR DENOUDEN ET AL: "Improving Reconstruction Autoencoder Out-of-distribution Detection with Mahalanobis Distance", ARXIV.ORG, CORNELL UNIVERSITY LIBRARY, 201 OLIN LIBRARY CORNELL UNIVERSITY ITHACA, NY 14853, 6 December 2018 (2018-12-06), XP080990097**
- **MUNAWAR ASIM ET AL: "Structural inpainting of road patches for anomaly detection", 2015 14TH IAPR INTERNATIONAL CONFERENCE ON MACHINE VISION APPLICATIONS (MVA), MVA ORGANIZATION, 18 May 2015 (2015-05-18), pages 41 - 44, XP033173072, DOI: 10.1109/ MVA.2015.7153128**

## Description

### TECHNICAL FIELD

The present disclosure generally relates to a method and a system for selecting an operation mode among a plurality of operation modes for an at least party self-driving vehicle.

### BACKGROUND

Vehicles are becoming equipped with increasingly advanced cruise control and pilot assist functions leading to semi-autonomous vehicles and ultimately to fully autonomous vehicles. Deploying an autonomous drive assist system or an autonomous drive system safely requires that the system can recognize the scenarios in which it can operate autonomously in a reliable manner. Accordingly, it is desirable to recognize any scenario which lies outside of an intended operation region. If a scenario outside of the intended operation region is recognized, the system may alert the driver that the driving mode of vehicle must be switched to manual mode.

However, due to the complexity of the operating environment for vehicles it is impossible to foresee and account for all unknown scenarios for an autonomous drive application. Hence, the systems cannot rely on specifying each operation region where the system is not allowed to operate.

Accordingly, there is a need for a reliable way of classifying the present scenario such that an appropriate driving mode for semi-autonomous or autonomous vehicle can be selected.

US2019/019087 A1 discloses a neural network to be applied to recognize known and unknown environments of a vehicle by evaluating, using the neural network, differences between an original scene and its reconstruction image. An operation mode of the vehicle is selected based on the environmental information.

Shashank Kotyan et al: "Self Training Autonomous Driving Agent", 26 April 2019, discloses an autonomous driving agent using an auto-encoder to learn the environment of a vehicle by evaluating a difference image which is calculated by background subtraction between two consecutive frames.

Taylor Denouden et al.: "Improving Reconstruction Autoencoder Out-of-Distribution Detection with Mahalanobis Distance", 6 December 2018, discloses an improved reconstruction-based auto-encoder to better detect out-of-distribution samples.

Asim Munawar and Clement Creusot: "Structural Impainting of Road Patches for Anomaly Detection", 14th IAPR International Conference on Machine Vision Applications, 18-22 May 2015, discloses a system that trains an inpainter to reconstruct road patches with frequent road patterns.

## SUMMARY

The disclosed subject matter generally relates to a method for selecting an operation mode among a plurality of operation modes for an at least partly self-driving vehicle.

The proposed method provides for selecting a driving mode based on, in contrast to prior art methods, concluding that a present scenario captured in a visual representation is part of an unknown scenario, i.e. that it is not recognized. If the captured visual representation is determined to be part of a known scenario, so-called inlier data representing a normal region of input data that can be recognized, the driving mode may be selected accordingly. However, if the visual representation is determined to be part of the unknown scenario, so-called outlier data that is at least partly un-recognized, another driving mode may be selected accordingly.

The proposed method provides the advantage that the unknown scenarios do not have to be recognized as such, it is sufficient to conclude that they do not belong to the known region of scenarios or data, i.e. that they are not part of the inlier data.

The above advantages are obtained by the features according to method claim 1. The reconstructed visual representation being produced based on a machine learning algorithm applied to the visual representation. The difference values thus represent the deviations, in a pixel-by-pixel manner, between the visual representation and the reconstructed visual representation. A large deviation generally indicates outlier data.

However, to accurately determine if the visual representation should be considered outlier data or inlier data, a difference metric is constructed based on all the difference values that exceed a threshold value. In this way it is possible to classify the visual representation as being either part of a known scenario, i.e. inlier data, or part of an unknown scenario, based on how well the algorithm is able to reconstruct the visual representation. If the algorithm is not able to reconstruct the visual representation with sufficient accuracy this will be reflected in the difference metric which then indicates that the visual representation is not part of inlier data and should be classified as outlier data. Thereby, with the herein proposed method, it is not necessary to foresee and account for all unknown scenarios.

In embodiments, the difference metric is calculated based on a sum of the difference values that are above a threshold value. Thereby proving for a relatively straight forward way of constructing the difference metric.

The inventors also propose a control unit according to claim 5, and a corresponding computer program product according to claim 14.

Further features of, and advantages with, the present disclosure will become apparent when studying the appended claims and the following description. The skilled person realize that different features of the present disclosure may be combined to create embodiments other than those described in the following, without departing from the scope of the present disclosure.

## BRIEF DESCRIPTION OF DRAWINGS

These and other aspects of the disclosed subject matter will now be described in more detail, with reference to the appended drawings showing example embodiments of the present disclosure, wherein:

FIG. 1 is a box diagram conceptually illustrating embodiments of the present disclosure;
FIG. 2 is a flow-chart of method steps according to embodiments of the present disclosure;
FIG. 3 conceptually illustrates a visual representation, a reconstructed visual representation, and difference values;
FIG. 4 illustrates example histograms of difference values;
FIG. 5 illustrates example histograms of difference metrics;
FIG. 6 is a flow-chart of method steps according to embodiments of the present disclosure; and
FIG. 7 conceptually illustrates a vehicle including a system according to embodiments of the present disclosure.

## DETAILED DESCRIPTION

In the present detailed description, various embodiments of the present disclosure are described. However, embodiments of the present disclosure may be embodied in many different forms and should not be construed as limited to the embodiments set forth herein; rather, these embodiments are provided for thoroughness and completeness, and to fully convey the scope of the disclosure to the skilled person. In some instances, well known structures and devices are shown in block diagram form in order to avoid obscuring the novelty of the exemplary embodiments presented herein. Like reference characters refer to like elements throughout.

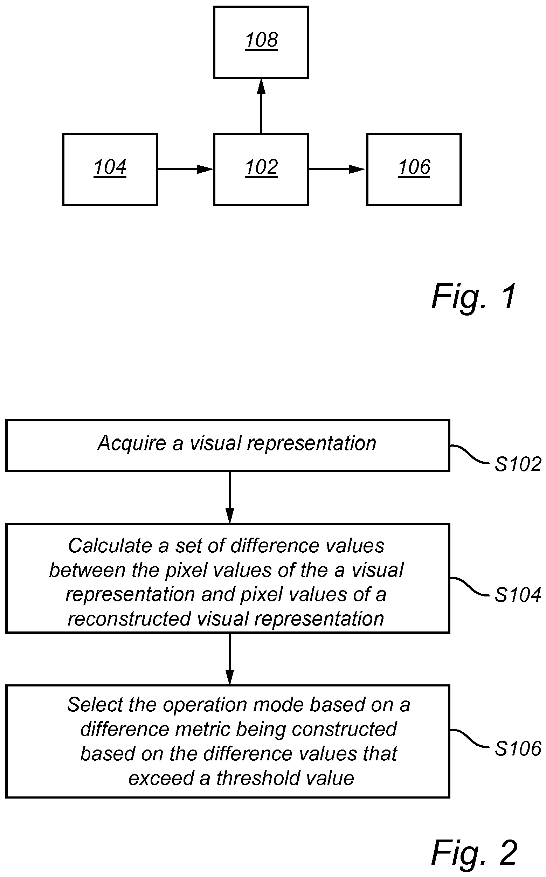

Fig. 1 is a box diagram illustrating a control unit 102 for selecting an operation mode among a plurality of operation modes for an at least partly self-driving vehicle based on evaluating a visual representation of the present scene of the vehicle captured by a scene capturing device 104. The control unit 102 is configured to calculate a set of difference values between the pixel values of the visual representation and pixel values of a reconstructed visual representation, the reconstructed visual representation being produced based on a machine learning algorithm applied to the visual representation. The control unit selects the operation mode based on a difference metric being calculated based on the difference values that exceed a threshold value.
According to embodiments, the control unit 102 may be configured to control the at least partly self-driving vehicle to switch to the selected operation mode. The control unit may for example control a drive system 106 responsible for controlling the operation such as propulsion and steering of the vehicle to switch to the selected operation mode.
According to embodiments, the control unit 102 may be configured to control an alert device 108 in the at least partly self-driving vehicle to provide an alert to the driver before switching to the selected operation mode. The alert device may include one or more of an audio alert device, a haptic device, a visual alert device, etc.
Fig. 2 is a flow-chart of method steps according to embodiments of the present disclosure. In step S102, acquiring a visual representation of the present scene of the at least partly self-driving vehicle, wherein the visual representation is captured by a scene capturing device. In step S104 calculating a set of difference values between pixel values of the visual representation and pixel values of a reconstructed visual representation, the reconstructed visual representation being produced based on a machine learning algorithm applied to the visual representation. In step S106, selecting the operation mode based on a difference metric being constructed based on the difference values that exceed a threshold value.
The proposed method is based on the realization that by comparing the visual representation that is captured by a scene capturing device, with a reconstructed visual representation being a reconstruction of the visual representation based on a machine learning algorithm applied to the visual representation, it is possible to classify the visual representation as one of inliers, i.e. a known range of data, or as an outlier, i.e. unknown range of data. The machine learning algorithm have been trained to reconstruct visual representations related to only one of the operation modes. More precisely, the machine learning algorithm may have been trained on inlier data, that is, data in which one of the operation modes is safe to use. Once the comparison indicates a deviation of some predetermined degree, the control unit may identify the present visual representation to belong to the outlier range of data, i.e. to include data from the unknown range. This may trigger the control unit to select a different operation mode. The selectable operation modes may include at least a manual driving mode and an at least partly self-driving mode.
The machine learning algorithm is a deep neural network. The deep neural network uses an auto-encoder architecture, which is learned to reconstruct the visual representations to the perception layer of the network. The network is trained on the inlier data only and thus learns to reconstruct the corresponding inlier visual representations. When the algorithm is subjected to novel data, i.e. outlier data it is not able to reconstruct the visual representations to the same degree of accuracy. Hence the difference between the acquired visual representation and the reconstructed visual representation can be taken as a metric of how well a scenario fits into the inlier region. In this way the algorithm doesn't need to learn all unknown scenarios, it is enough that it can determine whether a scenario is in the inlier region.

Embodiments of the present disclosure provide for selecting whether a self-driving function of an at least partly self-driving vehicle should be kept on, or if the driver should take control of the vehicle. If outliers are confirmed, then the driver may be prompted to take control of the vehicle.

The difference metric is a measure of to what extent the visual representation is an outlier. The difference metric may directly or indirectly be a measure of how accurately the machine learning algorithm is able to reconstruct the visual representation. A poor reconstruction indicates that the visual representation is an outlier and an accurate reconstruction indicates that the visual representation is an inlier.

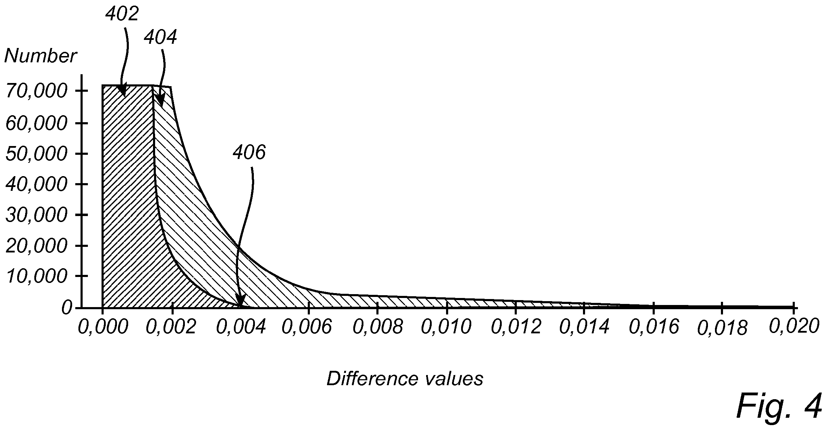

The threshold value is selected based on studying the distribution of the difference values for inlier data and known outlier data used for verification. The threshold value should be selected such that pixels in outlier regions can be identified. This will be further described with reference to fig. 4.

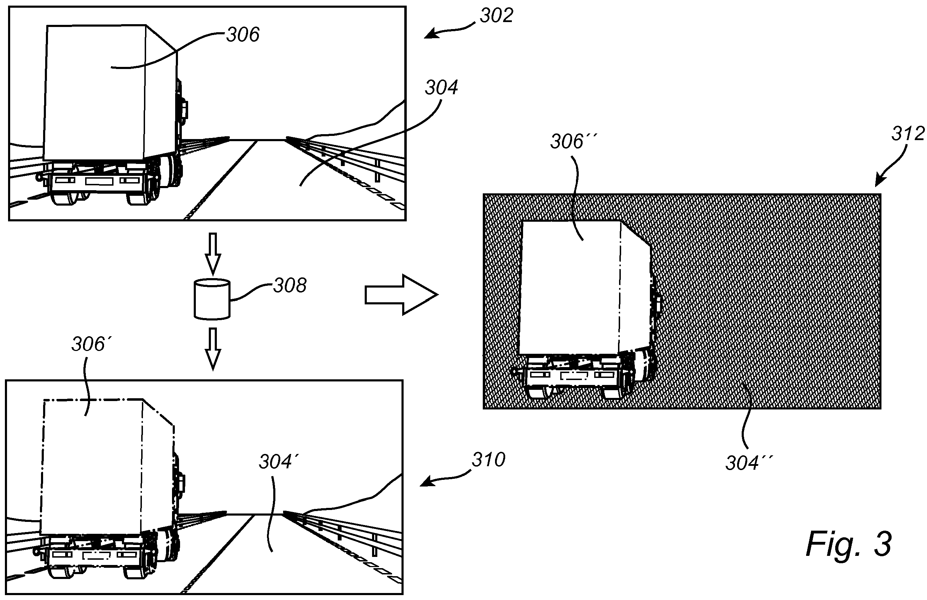

Fig. 3 conceptually exemplifies embodiments of the present disclosure. A scene capturing device may capture a visual representation 302. In the visual representation 302, there is shown a road surface 304 of a highway on which the at least partly self-driving vehicle from which the visual representation 302 was taken is driving, and a truck 306 is driving in front of and to the side of the at least partly self-driving vehicle. The visual representation 302 used as input to a machine learning algorithm 308. The machine learning algorithm, which is a deep learning network, reconstructs the visual representation and produces a reconstructed visual representation 310 including a reconstructed truck 306' and reconstructed road surface 304'.

The machine learning algorithm have been taught on inlier data represented by e.g. empty highway scenarios. Therefore, the road surface 306' is accurately reconstructed and the truck 306' is not accurately reconstructed.

A set of difference values is calculated based on a difference between pixel values of the visual representation 302 and pixel values of the reconstructed visual representation 310. In fig. 3, the difference values are shown, for illustrative purposes, as a difference visual representation 312, i.e. an image 312, including pixels of difference values. High difference values are represented in the difference visual representation 306 by pixels of high intensity. For example, the road surface 304" is in a region of low difference values which represents data well reconstructed by the machine learning algorithm. However, the truck 306" constitutes high difference values thereby indicating that the visual representation 302 belongs to the outlier region not well reconstructed by the machine learning algorithm 308. Thus, the visual representation 302 may be determined to be an outlier whereby a manual driving mode may be selected, and the driver is prompted to take over control of the vehicle. Preferably, an alert is provided to the driver indicative of a change from one operation mode to another one of the operation modes.

Accordingly, in one embodiment, calculating the set of difference values includes a pixel by pixel subtraction of the pixel values of one of the visual representation and the reconstructed visual representation from the other one of the visual representation and the reconstructed visual representation. As described below, calculating the set of difference values may include to square the pixel by pixel subtraction.

The selection of the operation mode is based on whether a difference metric exceeds a threshold value. The difference metric is calculated based on a sum of the difference values that exceed the threshold value. Accordingly, by summing the difference values, e.g. the pixel values of the difference visual representation 306, it is concluded whether the driver should take control of the vehicle or not, or if another operation mode should be selected.

Mathematically, the preferred difference metric, $L$, may be calculated by:

$$ L = \sum_{i,j} \theta \left( x_{ij} - \hat{x}_{ij} - x_0 \right) \left\| x_{ij} - \hat{x}_{ij} \right\|_2 $$

where $x_{ij}$ is the pixel value of one of the the visual representation and the reconstructed visual representation, $\hat{x}_{ij}$ is the pixel value of the other one of the the visual representation and the reconstructed visual representation, $x_0$ is the threshold value, and $\theta$ is the Heaviside step function such that only difference values in the difference visual representation with values that exceed the threshold value $x_0$, contributes to the difference metric $L$. The difference metric $L$ is the sum of the individual pixel-by-pixel subtractions squared.

The threshold value, $x_0$, may be selected based on studying the distribution of the difference values for inlier data and outlier data. Fig. 4 illustrates two histograms, a histogram 402 representing the distribution of difference values for inlier visual representations, and a histogram 404 representing the distribution of difference values for outlier visual representations. As can be seen, the histogram 404 includes a higher number of large difference values compared to the histogram 402, i.e. the "tail" of the histogram 404 is longer than the "tail" of the histogram 402. Accordingly, the threshold value 406 may be selected to be at a difference value so that as much as possible of the tail of the histogram 404 fall above the threshold without including much of the inlier histogram 402. This type of evaluation may be performed for multiple inlier and outlier data sets in order to tune the threshold value such that an acceptable level of false negative and false positives of outlier classifications is obtained. Note that the number axis in the histograms 402 and 404 have been cut in order to better visualize the tails.

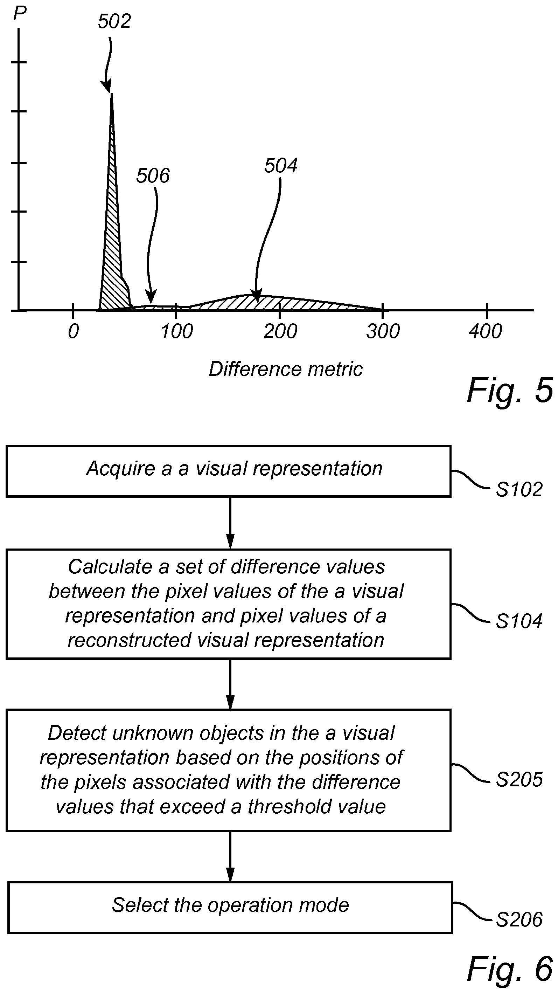

The operation mode is selected by comparing the difference metric to a metric threshold. The metric threshold is empirically determined based on applying the algorithm to test data. Turning to fig. 5, which illustrates two histograms, a first histogram 502 represents difference metrics for visual representation data known to be inlier visual representations, and a second histogram 504 represents difference metrics for visual representation data known to be outlier visual representations. The $P$ is a normalized frequency/occurrence of the difference metrics, commonly used for histograms. The histograms 502, 504 represent multiple visual representations for obtaining statistical accuracy. The metric threshold 506 should be selected somewhere between the two histograms such that the outlier visual representations can be detected. For example, the metric threshold 506 may be selected such that the difference metrics for the inlier visual representations, i.e. the histogram 502 are below the metric threshold 506.

Fig. 6 is a flow-chart of method steps according to example embodiments of the present disclosure. In addition to steps S102 and S104 also shown in fig. 1, there is a step S205 including detecting unknown objects in the visual representation based on the positions of the pixels associated with the difference values that exceed the threshold value. In step S206, selecting the operation mode based on a difference metric being constructed based on the difference values that exceed the threshold value, and based on the location of the detected unknown object. Turning to fig. 3 again, by analyzing the location of the high pixel values in a difference visual representation 312 representing the truck 306", in other words the pixels in the visual representation associated with the difference values that exceed the threshold value, it is possible to determine the position of the object 306 captured by the associated pixels. In this way, it may for example be determined that an outlier detected in an opposite lane can be disregarded and a self-driving operation mode can be maintained.

The control unit may have access to a memory storage device having thereon stored computer program code for executing the machine learning algorithm.

In addition, there is provided a computer program product comprising a computer readable medium having stored thereon computer program means for selecting an operation mode for an at least partly self-driving vehicle based on evaluating a visual representation of the present scene of the vehicle captured by a scene capturing device, wherein the computer program product comprises: code for calculating a set of difference values between the pixel values of the visual representation and pixel values of a reconstructed visual representation, the reconstructed visual representation being produced based on a machine learning algorithm applied to the visual representation; and code for selecting the operation mode based on a difference metric being constructed based on the difference values that exceed a threshold value.

The computer program product includes code for reconstructing the visual representation based on the machine learning algorithm for producing the reconstructed visual representation.

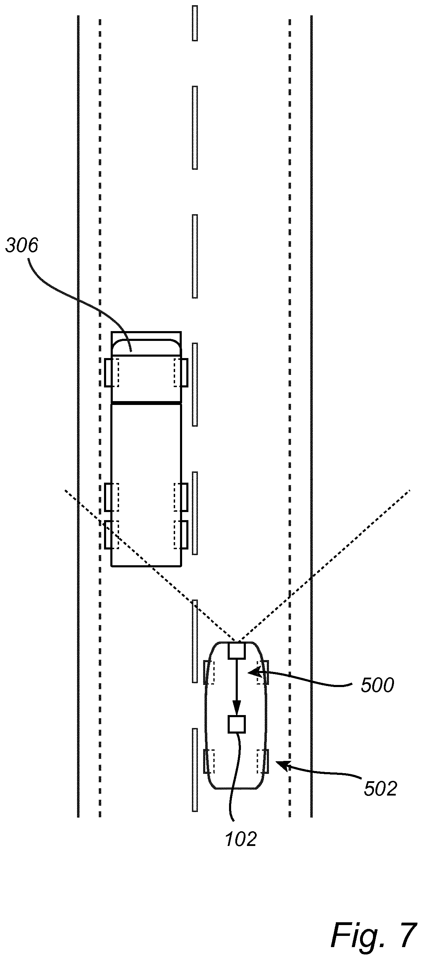

A system 500 according to embodiments of the present disclosure comprises a scene capturing device 104 configured to acquire visual representations of the vicinity of the at least partly self-driving vehicle; and a control unit 102 as described above. Fig. 7 illustrates an at least partly self-driving vehicle 502 comprising such a system 500. The scene capturing device 104 is here shown as a forward-looking image capturing device of the at least partly self-driving vehicle. However, the scene capturing device may equally well be a 360 camera to get a better understanding of the traffic scenario. Here the forward-looking image capturing device 104 captures a visual representation including the truck 306 which may be considered to contribute to outlier data, as conceptually described with reference to fig. 3.

"Acquiring" a visual representation may equally well be to receive or to obtain a visual representation.

An acquired visual representation is an image captured by an image capturing device. The acquired visual representation is considered an input visual representation to the algorithm. Further, a reconstructed visual representation is a reconstructed image, and a difference visual representation is a difference image.

The communication between the control unit and other devices, systems, or components may be hardwired or may use other known electrical connection techniques, or wireless networks, known in the art such as via CAN-buses, Bluetooth, Wifi, Ethernet, 3G, 4G, 5G, etc.

A control unit may include a microprocessor, microcontroller, programmable digital signal processor or another programmable device, as well as be embedded into the vehicle/power train control logic/hardware. The control unit may also, or instead, include an application-specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise modules in either hardware or software, or partially in hardware or software and communicate using known transmission buses such as CAN-bus and/or wireless communication capabilities.

A control unit of the present disclosure is generally known as an ECU, electronic control unit.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), complex programmable logic devices (CPLDs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

## Claims

1. A method for selecting an operation mode among a plurality of operation modes for an at least partly self-driving vehicle (502), the method comprising:

    acquiring (S102) an image (302) of the present scene of the at least partly self-driving vehicle, wherein the image is captured by a scene capturing device (104);
    calculating (S104) a set of difference values between the pixel values of the acquired image and pixel values of a reconstructed image, the reconstructed image being produced by a deep neural network using an autoencoder architecture applied to the acquired image, the deep neural network being trained on inlier data to reconstruct images of empty highway scenarios;
    selecting (S106; S205) the operation mode based on comparing a difference metric to a metric threshold empirically determined to distinguish inlier data representing empty highway scenarios from outlier data representing unknown scenarios, the difference metric being constructed based on a sum of difference values that exceed a threshold value, wherein the selectable operation modes include manual driving mode and an at least partly self-driving mode, the at least partly self-driving mode is selected in case of the difference metric being below the metric threshold; and
detecting (S205) positions of unknown objects in the acquired image based on the positions of the pixels in the acquired image associated with the difference values that exceed the threshold value, wherein the operation mode is selected also based on the location of the detected unknown object.

2. The method according to claim 1, wherein calculating the set of difference values includes a pixel by pixel subtraction of the pixel values of one of the acquired image and the reconstructed image from the other one of the acquired image and the reconstructed image.

3. The method according to claim 2, wherein calculating the set of difference values includes squaring the result of the individual pixel by pixel subtractions.

4. The method according to any one of the preceding claims, comprising:
providing an alert to the driver indicating a change from one operation mode to another one of the operation modes.

5. A control unit (102) for selecting an operation mode among a plurality of operation modes for an at least partly self-driving vehicle based on evaluating an acquired image of the present scene of the vehicle captured by a scene capturing device, wherein the control unit is configured to:

calculate a set of difference values between the pixel values of the acquired image and pixel values of a reconstructed image, the reconstructed image being produced by a deep neural network using an autoencoder architecture applied to the acquired image, the deep neural network being trained on inlier data to reconstruct images of empty highway scenarios;
selecting the operation mode based on comparing a difference metric to a metric threshold empirically determined to distinguish inlier data representing empty highway scenarios from outlier data representing unknown scenarios, the difference metric being calculated based on a sum of the difference values that exceed a threshold value, wherein the selectable operation modes include manual driving mode and an at least partly self-driving mode, the at least partly self-driving mode is selected in case of the difference metric being below the metric threshold;
detecting positions of unknown objects in the acquired image based on the positions of the pixels in the acquired image associated with the difference values that exceed the threshold value, wherein the operation mode is selected also based on the location of the detected unknown object.

6. The control unit according to claim 5, wherein the control unit is operative to execute the deep neural network.

7. The control unit according to any one of claims 5 and 6, wherein the control unit is configured to control the at least partly self-driving vehicle to switch to the selected operation mode.

8. The control unit according to any one of claims 5 to 7, wherein the control unit is configured to control an alert device (108) in the at least partly self-driving vehicle to provide an alert to the driver before switching to the selected operation mode.

9. A system (500) for selecting an operation mode among a plurality of operation modes for an at least partly self-driving vehicle, the system comprising:

a scene capturing device configured to acquire images of the vicinity of the at least partly self-driving vehicle; and
a control unit according to any one of claims 5 to 8.

10. The system according to claim 9, wherein the scene capturing device includes a forward-looking image capturing device.

11. The system according to any one of claims 9 and 10, wherein the scene capturing device includes 360-degree field of view image capturing device.

12. The system according to any one of claims 9 to 11, wherein the scene capturing device is a camera, preferable a high-definition camera.

13. An at least partly self-driving vehicle comprising a system according to any one of claims 9 to 12.

14. A computer program product comprising a computer readable medium having stored thereon computer program means for selecting an operation mode for an at least partly self-driving vehicle based on evaluating an acquired image of the present scene of the vehicle captured by a scene capturing device, wherein the computer program product comprises:

code for calculating a set of difference values between the pixel values of the acquired image and pixel values of a reconstructed image, the reconstructed image being produced by a deep neural network using an autoencoder architecture applied to the acquired image, the deep neural network being trained on inlier data to reconstruct images of empty highway scenarios;

code for selecting the operation mode based on comparing a difference metric to a metric threshold empirically determined to distinguish inlier data representing empty highway scenarios from outlier data representing unknown scenarios, the difference metric being constructed based on a sum of difference values that exceed a threshold value wherein the selectable operation modes include manual driving mode and an at least partly self-driving mode, the at least partly self-driving mode is selected in case of the difference metric being below the metric threshold; and

code for detecting position of unknown objects in the acquired image based on the positions of the pixels in the acquired image associated with the difference values that exceed the threshold value, wherein the operation mode is selected also based on the location of the detected unknown object.

**Patentansprüche**

1. Verfahren zum Auswählen eines Betriebsmodus aus einer Vielzahl von Betriebsmodi für ein mindestens teilweise selbstfahrendes Fahrzeug (502), wobei das Verfahren Folgendes umfasst:

Erfassen (S102) eines Bildes (302) der gegenwärtigen Szene des mindestens teilweise selbstfahrenden Fahrzeugs, wobei das Bild von einer Szenenaufnahmevorrichtung (104) aufgenommen wird;

Berechnen (S104) eines Satzes von Differenzwerten zwischen den Pixelwerten des erfassten Bildes und Pixelwerten eines rekonstruierten Bildes, wobei das rekonstruierte Bild von einem tiefen neuronalen Netzwerk unter Verwendung einer Autocodiererarchitektur produziert wird, die auf das erfasste Bild angewandt wird, wobei das tiefe neuronale Netzwerk an Inlierdaten trainiert ist, um Bilder von leeren Autobahnszenarien zu rekonstruieren;

Auswählen (S106; S205) des Betriebsmodus auf Basis des Vergleichens einer Differenzmetrik mit einem Metrikschwellwert, der empirisch bestimmt wird, um Inlierdaten, die leere Autobahnszenarien repräsentieren, von Outlierdaten, die unbekannte Szenarien repräsentieren, zu unterscheiden, wobei die Differenzmetrik auf Basis einer Summe von Differenzwerten konstruiert ist, die einen Schwellwert überschreiten, wobei die auswählbaren Betriebsmodi einen manuellen Fahrmodus und mindestens einen teilweisen Selbstfahrmodus beinhalten, wobei der mindestens teilweise Selbstfahrmodus in einem Fall ausgewählt wird, in dem die Differenzmetrik unter dem Metrikschwellwert liegt; und

Detektieren (S205) von Positionen von unbekannten Objekten im erfassten Bild auf Basis der Positionen der Pixel im erfassten Bild, die mit den Differenzwerten verknüpft sind, die den Schwellwert überschreiten, wobei der Betriebsmodus auch auf Basis des Standorts des detektierten unbekannten Objekts ausgewählt wird.

2. Verfahren nach Anspruch 1, wobei das Berechnen des Satzes von Differenzwerten eine Pixel-für-Pixel-Subtraktion der Pixelwerte von einem des erfassten Bildes und des rekonstruierten Bildes vom anderen des erfassten Bildes und des rekonstruierten Bildes beinhaltet.

3. Verfahren nach Anspruch 2, wobei das Berechnen des Satzes von Differenzwerten das Quadrieren des Ergebnisses der einzelnen Pixel-für-Pixeln-Subtraktionen beinhaltet.

4. Verfahren nach einem der vorhergehenden Ansprüche, das Folgendes umfasst:
Bereitstellen eines Hinweises für den Fahrer, der eine Änderung von einem Betriebsmodus zu einem anderen der Betriebsmodi anzeigt.

5. Steuereinheit (102) zum Auswählen eines Betriebsmodus aus einer Vielzahl von Betriebsmodi für ein mindestens teilweise selbstfahrendes Fahrzeug auf Basis des Schätzens eines erfassten Bildes der gegenwärtigen Szene des Fahrzeugs, das von einer Szenenaufnahmevorrichtung aufgenommen wurde, wobei die Steuereinheit zu Folgendem ausgelegt ist:

Berechnen eines Satzes von Differenzwerten zwischen den Pixelwerten des erfassten Bildes und Pixelwerten eines rekonstruierten Bildes, wobei das rekonstruierte Bild von einem tiefen neuronalen Netzwerk unter Verwendung einer Autocodiererarchitektur produziert wird, die auf das erfasste Bild angewandt wird, wobei das tiefe neuronale Netzwerk an Inlierdaten trainiert ist, um Bilder von leeren Autobahnszenarien zu rekonstruieren;

Auswählen des Betriebsmodus auf Basis des Vergleichens einer Differenzmetrik mit einem Metrikschwellwert, der empirisch bestimmt wird, um Inlierdaten, die leere Autobahnszenarien repräsentieren, von Outlierdaten, die unbekannte Szenarien repräsentieren, zu unterscheiden, wobei die Differenzmetrik auf Basis einer Summe der Differenzwerte berechnet wird, die einen Schwellwert überschreiten, wobei die auswählbaren Betriebsmodi einen manuellen Fahrmodus und mindestens einen teilweisen Selbstfahrmodus beinhalten, wobei der mindestens teilweise Selbstfahrmodus in einem Fall ausgewählt wird, in dem die Differenzmetrik unter dem Metrikschwellwert liegt;

Detektieren von Positionen von unbekannten Objekten im erfassten Bild auf Basis der Positionen der Pixel im erfassten Bild, die mit den Differenzwerten verknüpft sind, die den Schwellwert überschreiten, wobei der Betriebsmodus auch auf Basis des Standorts des detektierten unbekannten Objekts ausgewählt wird.

6. Steuereinheit nach Anspruch 5, wobei die Steuereinheit betreibbar ist, das tiefe neuronale Netzwerk auszuführen.

7. Steuereinheit nach einem der Ansprüche 5 und 6, wobei die Steuereinheit dazu ausgelegt ist, das mindestens teilweise selbstfahrende Fahrzeug zu steuern, um in den ausgewählten Betriebsmodus zu schalten.

8. Steuereinheit nach einem der Ansprüche 5 bis 7, wobei die Steuereinheit dazu ausgelegt ist, eine Hinweisvorrichtung (108) in dem mindestens teilweise selbstfahrenden Fahrzeug zu steuern, um dem Fahrer einen Hinweis bereitzustellen, bevor in den ausgewählten Betriebsmodus geschaltet wird.

9. System (500) zum Auswählen eines Betriebsmodus aus einer Vielzahl von Betriebsmodi für ein mindestens teilweise selbstfahrendes Fahrzeug, wobei das System Folgendes umfasst:

eine Szenenaufnahmevorrichtung, die dazu ausgelegt ist, Bilder der Nähe des mindestens teilweise selbstfahrenden Fahrzeugs zu erfassen; und
eine Steuereinheit nach einem der Ansprüche 5 bis 8.

10. System nach Anspruch 9, wobei die Szenenaufnahmevorrichtung eine nach vorn weisende Bildaufnahmevorrichtung beinhaltet.

11. System nach einem der Ansprüche 9 und 10, wobei die Szenenaufnahmevorrichtung eine 360-Grad-Sichtfeld-Bildaufnahmevorrichtung beinhaltet.

12. System nach einem der Ansprüche 9 bis 11, wobei die Szenenaufnahmevorrichtung eine Kamera ist, vorzugsweise eine hochauflösende Kamera.

13. Mindestens teilweise selbstfahrendes Fahrzeug, das ein System nach einem der Ansprüche 9 bis 12 umfasst.

14. Computerprogrammprodukt, das ein computerlesbares Medium umfasst, auf dem zum Auswählen eines Betriebsmodus für ein mindestens teilweise selbstfahrendes Fahrzeug auf Basis des Schätzens eines erfassten Bildes der gegenwärtigen Szene des Fahrzeugs, das von einer Szenenaufnahmevorrichtung aufgenommen wird, Computerprogrammmittel gespeichert sind, wobei das Computerprogrammprodukt Folgendes umfasst:

Code zum Berechnen eines Satzes von Differenzwerten zwischen den Pixelwerten des erfassten Bildes und Pixelwerten eines rekonstruierten Bildes, wobei das rekonstruierte Bild von einem tiefen neuronalen Netzwerk unter Verwendung einer Autocodiererarchitektur produziert wird, die auf das erfasste Bild angewandt wird, wobei das tiefe neuronale Netzwerk an Inlierdaten trainiert ist, um Bilder von leeren Autobahnszenarien zu rekonstruieren;
Code zum Auswählen des Betriebsmodus auf Basis des Vergleichens einer Differenzmetrik mit einem Metrikschwellwert, der empirisch bestimmt wird, um Inlierdaten, die leere Autobahnszenarien repräsentieren, von Outlierdaten, die unbekannte Szenarien repräsentieren, zu unterscheiden, wobei die Differenzmetrik auf Basis einer Summe von Differenzwerten konstruiert ist, die einen Schwellwert überschreiten, wobei die auswählbaren Betriebsmodi einen manuellen Fahrmodus und mindestens einen teilweisen Selbstfahrmodus beinhalten, wobei der mindestens teilweise Selbstfahrmodus in einem Fall ausgewählt wird, in dem die Differenzmetrik unter dem Metrikschwellwert liegt; und
Code zum Detektieren einer Position von unbekannten Objekten im erfassten Bild auf Basis der Positionen der Pixel im erfassten Bild, die mit den Differenzwerten verknüpft sind, die den Schwellwert überschreiten, wobei der Betriebsmodus auch auf Basis des Standorts des detektierten unbekannten Objekts ausgewählt wird.

## Revendications

1. Procédé pour sélectionner un mode de fonctionnement parmi une pluralité de modes de fonctionnement pour un véhicule au moins partiellement autonome (502), ce procédé comprenant :

l'acquisition (S102) d'une image (302) de l'environnement actuel du véhicule au moins partiellement autonome, cette image étant capturée par un dispositif de capture d'environnement (104) ;

le calcul (S104) d'un ensemble de valeurs de différence entre les valeurs de pixels de l'image acquise et les valeurs de pixels d'une image reconstruite, cette image reconstruite étant produite par un réseau neuronal profond en utilisant une architecture d'auto-encodeur appliquée à l'image acquise, ce réseau neuronal profond étant formé sur des données conformes afin de reconstruire des images de scénarios routiers vides ;

la sélection (S106 ; S205) du mode de fonctionnement en se basant sur la comparaison d'une mesure métrique de différence avec un seuil de mesure métrique déterminé empiriquement afin de faire la distinction entre des données conformes représentant des scénarios routiers vides et des données aberrantes représentant des scénarios inconnus, la mesure métrique de différence étant construite en se basant sur une somme de valeurs de différence qui dépassent une valeur de seuil, les modes de fonctionnement pouvant être sélectionnés comprenant un mode de conduite manuelle et un mode de conduite au moins partiellement autonome, le mode de conduite au moins partiellement autonome étant sélectionné dans le cas où la mesure métrique de différence est en-dessous du seuil de mesure métrique ; et

la détection (S205) des positions d'objets inconnus dans l'image acquise en se basant sur les positions des pixels dans l'image acquise associées aux valeurs de différence qui dépassent la valeur de seuil, le mode de fonctionnement étant sélectionné en se basant aussi sur l'emplacement de l'objet inconnu détecté.

2. Procédé selon la revendication 1, dans lequel le calcul de l'ensemble de valeurs de différence comprend une soustraction, pixel par pixel, des valeurs de pixels de soit l'image acquise, soit l'image reconstruite des valeurs de pixels de l'autre que l'image acquise ou l'image reconstruite.

3. Procédé selon la revendication 2, dans lequel le calcul de l'ensemble de valeurs de différence comprend l'élévation au carré du résultat des soustractions pixel par pixel individuelles.

4. Procédé selon l'une quelconque des revendications précédentes, comprenant :
la fourniture d'une alerte au conducteur indiquant un changement d'un mode de fonctionnement à un autre des modes de fonctionnement.

5. Unité de commande (102) pour sélectionner un mode de fonctionnement parmi une pluralité de modes de fonctionnement pour un véhicule au moins partiellement autonome en se basant sur l'évaluation d'une image acquise de l'environnement actuel du véhicule capturée par un dispositif de capture de l'environnement, cette unité de commande étant configurée de façon à :

calculer un ensemble de valeurs de différence entre les valeurs de pixels de l'image acquise et les valeurs de pixels d'une image reconstruite, cette image reconstruite étant produite par un réseau neuronal profond en utilisant une architecture d'auto-encodeur appliquée à l'image acquise, ce réseau neuronal profond étant formé sur des données conformes afin de reconstruire des images de scénarios routiers vides ;

sélectionner le mode de fonctionnement en se basant sur la comparaison d'une mesure métrique de différence avec un seuil de mesure métrique déterminé empiriquement afin de faire la distinction entre des données conformes représentant des scénarios routiers vides et des données aberrantes représentant des scénarios inconnus, la mesure métrique de différence étant calculée en se basant sur une somme des valeurs de différence qui dépassent une valeur de seuil, les modes de fonctionnement pouvant être sélectionnés comprenant un mode de conduite manuelle et un mode de conduite au moins partiellement autonome, le mode de conduite au moins partiellement autonome étant sélectionné dans le cas où la mesure métrique de différence est en-dessous du seuil de mesure métrique ; et à

détecter les positions d'objets inconnus dans l'image acquise en se basant sur les positions des pixels dans l'image acquise associées aux valeurs de différence qui dépassent la valeur de seuil, le mode de fonctionnement étant sélectionné en se basant aussi sur l'emplacement de l'objet inconnu détecté.

6. Unité de commande selon la revendication 5, cette unité de commande servant à exécuter le réseau neuronal profond.

7. Unité de commande selon l'une quelconque des revendications 5 et 6, cette unité de commande étant configurée de façon à commander le véhicule au moins partiellement autonome pour passer au mode de fonctionnement sélectionné.

8. Unité de commande selon l'une quelconque des revendications 5 à 7, cette unité de commande étant configurée de façon à commander un dispositif d'alerte (108) dans le véhicule au moins partiellement autonome afin de fournir une alerte au conducteur avant de passer au mode de fonctionnement sélectionné.

9. Système (500) pour sélectionner un mode de fonctionnement parmi une pluralité de modes de fonctionnement pour un véhicule au moins partiellement autonome, ce système comprenant :

    un dispositif de capture d'environnement pour acquérir des images de la proximité du véhicule au moins partiellement autonome ; et
    une unité de commande selon l'une quelconque des revendications 5 à 8.

10. Système selon la revendication 9, dans lequel le dispositif de capture de l'environnement comprend un dispositif de capture d'images tourné vers l'avant.

11. Système selon l'une quelconque des revendications 9 et 10, dans lequel le dispositif de capture de l'environnement comprend un dispositif de capture d'images avec un champ de vision de 360 degrés.

12. Système selon l'une quelconque des revendications 9 à 11, dans lequel le dispositif de capture de l'environnement est une caméra, de préférence une caméra à haute définition.

13. Véhicule au moins partiellement autonome comportant un système selon l'une quelconque des revendications 9 à 12.

14. Progiciel comportant un support lisible par ordinateur sur lequel est stocké un programme informatique pour sélectionner un mode de fonctionnement pour un véhicule au moins partiellement autonome en se basant sur l'évaluation d'une image acquise de l'environnement actuel du véhicule capturée par un dispositif de capture de l'environnement, ce progiciel comprenant :

    un code pour calculer un ensemble de valeurs de différence entre les valeurs de pixels de l'image acquise et les valeurs de pixels d'une image reconstruite, cette image reconstruite étant produite par un réseau neuronal profond en utilisant une architecture d'auto-encodeur appliquée à l'image acquise, ce réseau neuronal profond étant formé sur des données conformes afin de reconstruire des images de scénarios routiers vides ;
    un code pour sélectionner le mode de fonctionnement en se basant sur la comparaison d'une mesure métrique de différence avec un seuil de mesure métrique déterminé empiriquement afin de faire la distinction entre des données conformes représentant des scénarios routiers vides et des données aberrantes représentant des scénarios inconnus, la mesure métrique de différence étant construite en se basant sur une somme de valeurs de différence qui dépassent une valeur de seuil, les modes de fonctionnement pouvant être sélectionnés comprenant un mode de conduite manuelle et un mode de conduite au moins partiellement autonome, le mode de conduite au moins partiellement autonome étant sélectionné dans le cas où la mesure métrique de différence est en-dessous du seuil de mesure métrique ; et
un code pour détecter la position d'objets inconnus dans l'image acquise en se basant sur les positions des pixels dans l'image acquise associées aux valeurs de différence qui dépassent la valeur de seuil, le mode de fonctionnement étant sélectionné en se basant aussi sur l'emplacement de l'objet inconnu détecté.

*Fig. 1*

Acquire a visual representation — S102

Calculate a set of difference values between the pixel values of the a visual representation and pixel values of a reconstructed visual representation — S104

Select the operation mode based on a difference metric being constructed based on the difference values that exceed a threshold value — S106

*Fig. 2*

*Fig. 3*

Fig. 4

Fig. 5

| Acquire a a visual representation | S102 |

| Calculate a set of difference values between the pixel values of the a visual representation and pixel values of a reconstructed visual representation | S104 |

| Detect unknown objects in the a visual representation based on the positions of the pixels associated with the difference values that exceed a threshold value | S205 |

| Select the operation mode | S206 |

Fig. 6

*Fig. 7*

**REFERENCES CITED IN THE DESCRIPTION**

**Patent documents cited in the description**

- US 2019019087 A1

**Non-patent literature cited in the description**

- **SHASHANK KOTYAN et al.** *Self Training Autonomous Driving Agent*, 26 April 2019
- **TAYLOR DENOUDEN et al.** *Improving Reconstruction Autoencoder Out-of-Distribution Detection with Mahalanobis Distance*, 06 December 2018
- **ASIM MUNAWAR** ; **CLEMENT CREUSOT**. Structural Impainting of Road Patches for Anomaly Detection. *14th IAPR International Conference on Machine Vision Applications*, 18 May 2015